# EUROPEAN PATENT SPECIFICATION

(11) **EP 0 615 731 B1**
(45) Date of publication and mention of the grant of the patent: **14.10.1998**
(21) Application number: 94830047.0
(22) Date of filing: 09.02.1994
(51) Int. Cl.: A61C 9/00, A61C 13/00

(54) **Universal support for manufacturing models of dental arches**
Universelle Stütze für die Herstellung von Dentalbogen-Modellen
Support universal pour la réalisation de modèles d'arcades dentaires

(30) Priority: 12.02.1993 IT RM930026 U
(43) Date of publication of application: 21.09.1994
(73) Proprietor: Gentileschi, Gaetano, I-00138 Roma (IT)
(72) Inventor: Gentileschi, Gaetano, I-00138 Roma (IT)
(74) Representative: Sarpi, Maurizio

(56) References cited:
- EP-A- 0 030 312
- DE-U- 9 011 173

## Description

The present invention refers to an universal support for manufacturing models of dental arches. More specifically, the invention concerns an auxiliary device for the correct reciprocal positioning of the negative impression and of the elements that will constitute the model during the various steps of manufacturing of the same model.

As it is well known, in order to realize dental prostheses, bridges and caps, as well as orthodontic apparatuses, negative impressions of the dental arch are taken, said negative impressions being then developed in order to obtain the relevant model, pouring a suitable casting stone material. Some pins are embedded within the stone material crown model, before it solidifies, said pins being provided between the various teeth or group of teeth upon will be necessary to intervene, and axially aligned therewith.

According to what is described in U.S.A. patent no. 3,890,710, wherein the technique of the so called "Dowel Pins" is described, the pins are positioned corresponding to the relevant teeth, using an alignment device made up of a lower support plate upon which the dental tray support with the negative impression is provided, and of an upper plate provided directly above the other one and coupled to the same by two telescopic vertical rods. To the lower face of the second plate a base covered with a layer of a deformable material, e.g. a polymeric foam, is fixed, in which the pins must be singularly coupled. The exact position of each pin is determined centring it with respect to the negative impression of the corresponding tooth and lowering the upper plate, so that the rear part of the pin remains fixed within the layer of deformable material. As soon as all the pins have been positioned, the stone material is poured in the negative impression and the upper plate is lowered with the pins in the mixture, so that they are embedded up to a predetermined height.

When the stone material crown hardened, after having separated the layer of deformable material from the pins, a second quantitative of stone material is poured in the negative impression, corresponding in the model to the gums section and to a terminal base.

According to the European Patent No. 0 030 312, a method similar to the previous one does not allow to realize sufficiently exact models, either for the difficulties met while centring the pins with respect to the negative impression and disposing them perfectly, normal to the model plane, or because the stone material mixture, is subject to dimensional modifications during its hardening, and the embedded pins are subjected to the same modifications.

Further, in DE-U-90 11 173 is disclosed a support plate and a shoulder for a dental tray support to be removably connected to said plate along one side, said shoulder being normal with respect to said plate (see the features of the preamble of claim 1). The known support is, however, not able to accommodate a dimensionally stable base plate in order to execute, in the desired exact position, one or more holes suitable for the fixage of the pins.

In order to overcome said difficulties, EP-A-0 030 312 proposes a method in which the pins are fixed, in the suitably predetermined position, in holes realized on a stiff and dimensionally stable base plate, said base plate realizing the final base of the model; in this way the distances between the pins remain the original ones also after that the stone material solidifies in the negative impression. A device realized to perform the above method comprises a tool similar to the one according to the prior art and further provided with a frame, replacing the upper plate, wherein a base realized with a suitable transparent material is introduced. The exact position where each point should be provided on the base is revealed by a ray of light which, passing through the transparent material, is directed exactly toward the centre of the tooth in the below negative impression.

The holes are realized in the points determined as indicated by a drilling-stone material machine and special pins having a frusto-conical tip are then introduced, if necessary by heat-pressure.

The model obtained by this technique, immediately after the hardening of the stone material, is vertically cut to sever one tooth from the other (obviousiy without acting on the base) so that every inner tension due to the expansion of the stone material is avoided. Removable pins are thus obtained, introduced by the pins in a base the dimensions of which are exactly the original ones.

The method according to the cited European Patent has been also used with more complex positioning devices for the pins, connected to the drilling machine, in which it is provided the housing for the dental tray support and of the base to be drilled in a corresponding well precise position, e.g. one beside the other or one over the other, with a system that allows to transfer the position of the centre of the tooth, taken from the negative impression, in the corresponding position on the base upon which the hole must be realized by the drilling machine.

The most widely used method uses drilling machines having a helically-tipped cutter with the tip vertically and upwardly oriented, driven by a motor housed within the bottom part of the machine, and of a horizontal support plane mounted on elastic supports and provided with a hole corresponding to the bit of the helically-tipped cutter. Pushing downward the support plane, the bit of the helically-tipped cutter exits from the hole and the motor of the drilling machine is actuated. Said apparatuses are provided with alignment posts disposed over the horizontal plane and projecting on the same plane a thin ray of light, perfectly aligned with the bit of the helically-tipped cutter. Alternatively, on the post a vertical movable rod is provided, having the function of pointer.

It is evident that it is possible to use this kind of apparatuses to realize holes on basis upon which the exact points taken on the basis of the negative impression have been manually indicated, e.g. by a felt pen; however the best and most used way consists in placing the negative impression directly on the base to be drilled by suitable supports. In this way, the position of the hole is taken directly from the negative impression using the alignment post of the drilling machine, and the hole is immediately reproduced in the below base pushing on the horizontal plane.

All the support devices based on the above method, among which the original ones of the owner of the above mentioned European Patent (Known as Zeiser devices), and other similar devices, provides that in a first stage of the manufacturing of the model, the model of the base plate is housed on the horizontal plane of the drilling machine, exposed to the helically-tipped cutter bit emerges from below, while the negative impression is positioned above, exposed to the light beam or to the pointer of the drilling machine; once the holes have been realized, and after having introduced the pins and poured the stone material, the base is placed above the dental tray support (with the pins embedded in the stone material), while maintaining the original alignment.

The Zeiser system provides a support device for negative impression and base (already provided with the same profile of the dental arch) rather complicated, having a vertical drilled slide to be applied to the drilling machine, a support plate (or longitudinal slide), under which the housing of the base to be drilled is provided, and a support for the dental tray support, having blocking means to prevent that the dental tray support moves during the drilling of the holes. The dental tray support is also provided with a shoulder, against which the edge of said dental tray support abuts and against which, during the following step of the production of the model, the base with the pins abuts, aligning it with the reference angles provided on the same shoulder.

Different alternative support devices have been realized, substantially because of the high costs of the above apparatus and of the relevant fittings (among which, for example, the mentioned bases).Said devices substantially comprise a base plate upon which the dental tray support is provided, anchoring it by a suitable adhesive material or mechanically, and below said plate the base to be drilled is fixed, introducing the same for example in oppositely provided pins. During the second stage of the development of the model, the base is fixed above the negative impression, always employing alignment pins.

It is well evident that the mentioned support needs the use of bases particularly shaped, having holes suitable to couple with relevant alignment pins; therefore it is not possible to employ with said devices neither the original Zeiser bases nor simple handicraft bases made up of Plexiglas or other suitable plastic material rectangular plates.

It is therefore the object of the present invention that of providing a support for manufacturing models of dental arches with removable teeth that can be used with any kind of drilling machine, independently of, e.g., the height of the relevant alignment post, and that fits to rectangular bases having different dimensions, as well as to the original Zeiser bases.

To this aim, it is proposed to fix the base under the support plate upon which the dental tray support must rest by a rectangular or square recess in the same plate, such that bases having different shape and dimensions can fit within said recess, the blocking of the little bases being guaranteed by contrast pins or screws suitably provided.

Secondly, it is proposed to provide the support plate with a removable shoulder, fixed at 90° degrees along the side of the plate on which the edge of the dental tray support must be aligned. The shoulder, usually useful during the production of the model, can be separated from the support plate to allow its use on drilling machines having the alignment post particularly low.

It is therefore specific object of the present invention to provide an universal support for manufacturing models of dental arches as defined in claim 1.

Further features of the support according to the invention will be described in the dependent claims. Said features, as well as the advantages of the invention, will be more evident making reference to the enclosed drawings, wherein:
figure 1 is a perspective view of a preferred embodiment of the support according to invention;
figure 2 is a bottom plan view of the same support;
figure 3 is a section view of the support, taken along the line A-A of figure 2;
figure 4 is a front view of the upper section of the shoulder of the same support;
figure 5 is a plan view of the same section;
figure 6 is a front view of the lower section of the shoulder of the same support;
figure 7 is a plan view of the same section.

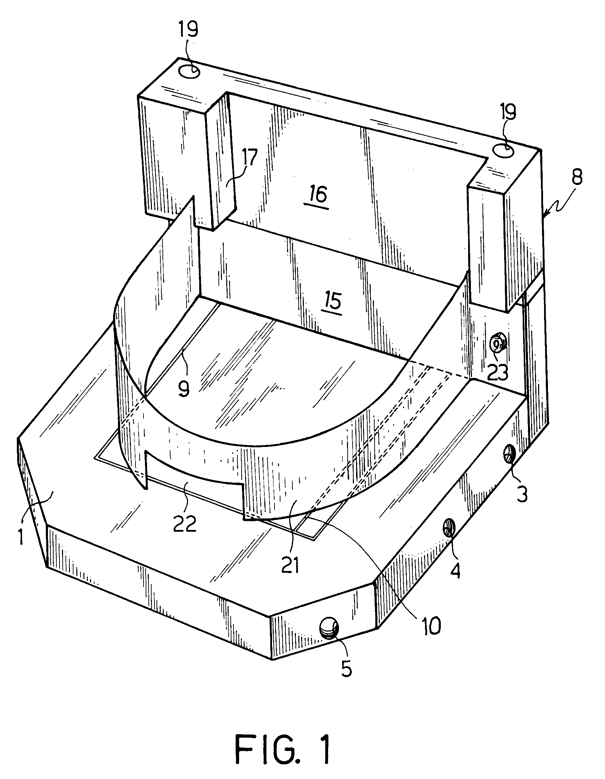

As it is shown in figure 1, the support according to the invention comprises a support plate 1 preferably made up of an aluminium alloy or stainless steel, having a thickness of about 13 mm.

It is to be noted that the bases to realize the models of dental arches now used have standard dimensions obviously related to the normal dimensions of the human dental arches. Specifically, the little rectangular bases have dimensions of 6x7 cm and the great ones have dimensions of 6.5x7.5 cm, with a thickness of 6, 8 or 10 mm; said dimensions are the same also for the Zeiser bases, with the only difference that the height of 6 cm (or 6.5 cm) is reached only in correspondence of the centre of the arc delimiting the base.

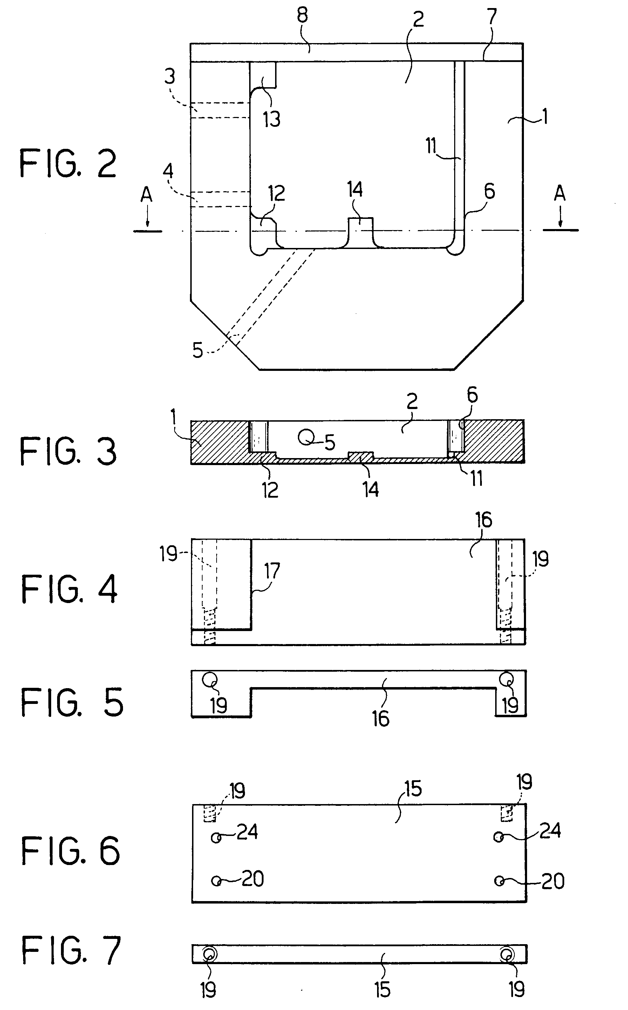

The support shown fits to bases having all the mentioned dimensions, being provided with a recess 2 (that can be seen in figure 2) having dimensions of about 6,6x7,6.

In order to maintain the bases correctly positioned mainly when the little ones are employed, threaded blocking pins (not shown) inserted in passing holes 3, 4 and 5 are employed. As it can be seen in figure 2, in order to obtain a perfect alignment of the base placed below the plate 1 with the negative impression rested on the same, two of pins introduced within the hole 3 and 4 push said base against the right side 6 of the recess The angle between said side 6 and the side 7 aligned with the shoulder 8 is assumed as the fixed reference during all the steps of manufacturing of the model.

The position of the reference side 6 is indicated by the line 9 on the upper face of the support plate 1, on said face being preferably indicated also the traces of the other sides of the recess 2, as well as a line of demarcation corresponding to the free edge of the 6x7 cm bases, when they are correctly introduced and fixed in the recess 2. The mentioned demarcation lines facilitate the centring of the dental tray support on the support plate 1.

In case bases of the Zeiser type are used, they are maintained correctly positioned also by the pin introduced in the diagonal hole 5, oriented along a line converging toward the angle between the right side 6 of the recess 2 and the side 7 aligned with the shoulder 8.

As it can be seen from figures 2 and 3, on the bottom part of the recess 2 some plane projections 11 - 14 are provided, preferably having a thickness of 4 mm, said projections being provided to maintain the lower surface of the base sufficiently spaced apart from the bottom of the recess 2, thus allowing to have a sufficient safety space for the bit of the helically-tipped cutter arriving at the end of the stroke after having drilled the base. This solution takes into consideration to allow that the thermosetting materials that are often used to make the bases usually forms chips, and therefore in order to obtain hole as much as is possible without deburring it is necessary to slightly extend the run of the drilling machine or to repeat the passage more the one time.

The peripheral projections 11 - 14 have a particular shape in order to make the support more easily adaptable to the various kind of bases: while the part of the side 6 of the projection is made up by a simple step 11 having a rather limited width since the base will be always aligned against this side 6, on the opposite side the projections 12 and 13 shall have a bigger width, in order to sustain also the little rectangular bases. Further, the central projection 14 is provided just to realize a rest for the curved bases of the Zeiser kind.

Coming back to figure 1, it is to be noted that the shoulder 8 is divided in two superimposed sections 15 and 16, in order to make the support according to the invention suitable for any kind of drilling machine, said sections being shown in the detail of figures 4 - 7. On the upper section 16, a vertical strike 17 is provided, said strike facilitating the alignment of the base upon the negative impression during the second step of the realization of the model.

The two sections 15 and 16 of the shoulder 8 are connected by screws inserted into the holes 19, while the lower section 15 is connected with the support plate 1 by screw inserted into the holes 20.

Figure 1 also shows, mounted, a facultative fitting made up of a curved band 21, housing the dental tray support on the plate, leaving the relevant handle passing through the passage 22, and even more containing the silicone that is usually employed to fix said dental tray support on the plate 1.

The band 21 is fixed to the lower section 15 of the shoulder 8 by the screws 23, the corresponding holes being shown in figure 1.

The present invention has been described with specific reference to some of its preferred embodiments, but it is to understood that changes and/or modifications can be introduced by those skilled in the art without departing from the relevant scope defined by the claims.

## Claims

1. Support for manufacturing models of dental arches, comprising a support plate (1) and a shoulder (8) for a dental tray support to be removably connected to said plate (1) along one side, said shoulder (8) being normal with respect to said plate (1), characterised in that said plate (1) is provided on its upwardly directed face with a recess (2) having a substantially rectangular or square shape and being provided with blocking pins introduced in passing holes (3, 4, 5) through the lateral sides of the plate (1), and one side (7) of said recess (2) being exactly aligned with said shoulder (8); said recess (2) having dimensions suitable to accommodate the commonly used base plates for models.

2. Support according to claim 1, wherein some peripheral flat projections (11-14) are provided on the bottom of said recess (2).

3. Support according to claim 2, wherein said peripheral projections (11-14) comprise a step (1 1) along a second side (6) of said recess (2) normal with respect to said first side (7), two substantially square projections (12 and 13) provided at the ends of a third side of said recess (2) opposite to said side (6) and a further projection (14) placed in an intermediate position along the fourth side of said recess (2), opposite with respect to said first side (7), said projections (12-14) and said step (11) having all the same thickness.

4. Support according to claim 3, wherein said passing holes (3, 4 and 5) for said blocking pins are three, two of them (3 and 4) being parallel with respect to said fourth and first side (7), both having an opening on said third side, and one (5) diagonal along a line converging toward the angle of said recess (2) realized by said first (7) and second (6) side, and with an opening on said fourth side.

5. Support according to each one of the preceding claims 1-4, wherein said shoulder (8) is provided with a vertical projection (17) for aligning said base during the production of the model, exactly aligned with said second side (6) of said recess (2).

6. Support according to each one of the preceding claims 1-5, wherein said shoulder (8) is divided in two sections (15 and 16) by a horizontal cut, said sections being removably connected to each other.

7. Support according to each one of the preceding claims 1-6, wherein said support plate (1) is provided on its upper surface with a reference line (9) exactly corresponding to said second side (6) of said recess.

8. Support according to claim 7, wherein said support plate (1) is provided on its upper surface with further reference lines corresponding to the other sides of said recess.

9. Support according to each one of the preceding claims 1-8, further comprising a band (21) to contain said dental tray support on said support plate (l), said band being removably fixed to said shoulder (8).

## Patentansprüche

1. Support für Produktionsmodelle von Dentalbrücken, mit einer Stützplatte (1) und einer Schulter (8) für einen Dentalablagesupport, der mit der Platte (1) längs einer Seite wiederabnehmbar zu verbinden ist, bei dem die Schulter (8) normal in bezug zur Platte (1) angeordnet ist,
**dadurch gekennzeichnet,**
daß die Platte (1) an ihrer nach oben gerichteten Seite mit einer Aussparung (2) versehen ist, die eine im wesentlichen rechteckförmige oder quadratische Form aufweist und mit Sperrstiften versehen ist, welche in durch die seitlichen Seiten der Platte geführte Paßlöcher (3, 4, 5) eingeführt sind, und daß eine Seite (7) der Aussparung (2) genau mit der Schulter (8) ausgerichtet ist und die Aussparung (2) ausreichende Dimensionen aufweist, um die üblicherweise verwendeten Basisplatten für Modelle und dgl. aufzunehmen.

2. Support nach Anspruch 1, bei dem am Boden der Ausnehmung (2) einige periphere flache Vorsprunge (11-14) angeordnet sind.

3. Support nach Anspruch 2, bei dem die peripheren Vorsprünge (11-14) eine Stufe (11) längs einer zweiten Seite (6) der Aussparung (2) und zwar normal in bezug auf die erste Seite (7) aufweist, von denen zwei im wesentlichen quadratische Vorsprünge (12 und 13) an den Enden einer dritten Seite der Aussparung (2) angeordnet sind, welche entgegengesetzt zu der zweiten Seite (6) befindet, und daß ein weiterer Vorsprung (14) in einer Zwischenstellung zwischen der vierten Seite der Aussparung (2) und zwar entgegengesetzt in bezug zur ersten Seite (7) angeordnet ist, und daß die Vorsprünge (12-14) und die Stufe (11) sämtlich die gleiche Dicke aufweisen.

4. Support nach Anspruch 3, bei dem drei 3 Paßlöcher (2, 4 und 5) für die Sperrstifte vorhanden sind, von denen zwei (3 und 4) in bezug zu der vierten und ersten Seite (7) parallel verlaufen und eine Öffnung an der dritten Seite enthalten, und von denen ein Paßloch (5) diagonal längs einer Linie angeordnet ist, die unter einem Winkel zur Aussparung (2) konvergiert, der durch die erste Seite (7) und die zweite Seite (6) gebildet ist, und daß sich eine Öffnung an der vierten Seite befindet.

5. Support nach einem der vorhergehenden Ansprüche 1-4, bei dem die Schulter (8) mit einer vertikalen Ausladung (17) zur Ausrichtung der Basis während der Herstellung des Modells versehen ist und die vertikale Ausladung genau mit der zweiten Seite (6) der Aussparung (2) ausgerichtet ist.

6. Support nach einem der vorhergehenden Ansprüche 1-5, bei der die Schulter (8) in zwei Teile (15 und 16) durch einen Horizontalschnitt unterteilt ist und daß diese Teile wieder trennbar aneinander befestigt sind.

7. Support nach einem der vorhergehenden Ansprüche 1-6, bei dem die Trägerplatte (1) an ihrer oberen Oberfläche mit einer Bezugslinie (9) versehen ist, die genau mit der zweiten Seite (6) der Ausnehmung korrespondiert.

8. Support nach Anspruch 7, bei dem die Trägerplatte (1) an ihrer oberen Oberfläche mit einer weiteren Bezugslinie versehen ist, die mit den anderen Selten der Ausnehmung korrespondiert.

9. Support nach einem der vorhergehenden Ansprüche 1-8, bei dem ein Band (21) vorhanden ist, welches den Dentalablagesupport auf der Trägerplatte (1) enthält, und daß das Band wieder abnehmbar an der Schulter (8) befestigt ist.

## Revendications

1. Support pour la fabrication de modèles d'arcades dentaires, comprenant une plaque de support (1) et un épaulement (8) de telle sorte qu'un support de plateau dentaire soit relié de manière démontable à ladite plaque (1), le long d'un côté, ledit épaulement (8) étant perpendiculaire à ladite plaque (1), caractérisé en ce que ladite plaque (1) est pourvue, sur se face dirigée vers le haut, d'un évidement (2) ayant une forme essentiellement rectangulaire ou carrée, et est pourvue de broches de blocage introduites dans des trous débouchants (3, 4, 5) aménagés au travers des côtés latéraux de la plague (1), et en ce qu'un côté (7) dudit évidement (2) est aligné exactement avec ledit épaulement (8) ; ledit évidement (2) ayant des dimensions appropriées pour loger les plaques de base habituellement utilisées pour les modèles.

2. Support selon la revendication 1, dans lequel certaines parties saillantes périphériques plates (11 à 14) sont aménagées au gond dudit évidement (2).

3. Support selon la revendication 2, dans lequel lesdites parties saillantes périphériques (11 à 14) comprennent une marche (11) aménagée le long d'un deuxième côté (6) dudit évidement (2), perpendiculaire audit premier côté (7), deux parties saillantes essentiellement carrées (12 et 13) aménagées aux extrémités d'un troisième côté dudit évidement (2), opposé audit côté (6), et une autre partie saillante (14) placée en une position intermédiaire le long du quatrième côté dudit évidement (2), oppose audit premier côté (7), lesdites parties saillantes (12 à 14) et ladite marche (11) ayant toutes la même épaisseur.

4. Support selon la revendication 3, dans lequel lesdites trous débouchants (3, 4 et 5) pour lesdites broches de blocage sont au nombre de trois, deux d'entre eux (3 et 4) étant parallèles audit quatrième côté et audit premier côté (7) et ayant tous les deux une ouverture sur ledit troisième côté, et l'un d'entre aux (5) étant en diagonale le long d'une ligne convergeant vers l'angle dudit évidement (2) qui est formé par ledit premier côté (7) et ledit deuxième côté (6), et ayant une ouverture sur ledit quatrième côté.

5. Support selon chacune des revendications précédentes 1 à 4, dans lequel ledit épaulement (8) est pourvu d'une partie saillante verticale (17) pour l'alignement de ladite base pendant la production du modèle, partie saillante qui est alignée exactement avec ledit deuxième côté (6) dudit évidement (2).

6. Support selon chacune des revendications précédentes 1 à 5, dans lequel ledit épaulement (8) est subdivisé en deux sections (15 et 16) par une découpe horizontale, lesdites sections étant reliées l'une à l'autre de manière démontable.

7. Support selon chacune des revendications précédentes 1 à 6, dans lequel ladite plaque de support (1) est pourvue, sur sa surface supérieure, d'une ligne de référence (9) correspondant exactement audit deuxième côté (6) dudit évidement.

8. Support selon la revendication 7, dans lequel ladite plaque de support (1) est pourvue, sur sa face supérieure, d'autres lignes de référence correspondant aux autres côtés dudit évidement.

9. Support selon chacune des revendications précédentes 1 à 8, comprenant en outre une bande (21) servant à contenir ledit support de plateau dentaire sur ladite plaque de support (1), ladite bande étant fixée de manière démontable audit épaulement (8).
